# EUROPEAN PATENT APPLICATION

(11) **EP 3 975 102 A1**
(43) Date of publication of application: **30.03.2022**
(21) Application number: 20809536.4
(22) Date of filing: 01.05.2020
(51) Int. Cl.: G06Q 50/06, G01M 3/02, G01N 21/3504

(54) **INSPECTION DATA MANAGEMENT SYSTEM, MANAGEMENT DEVICE, MANAGEMENT METHOD, AND TERMINAL DEVICE**

(30) Priority: 20.05.2019 JP 2019094636
(71) Applicant: KONICA MINOLTA, INC., Tokyo 100-7015 (JP)
(72) Inventor: TAKAMURA, Shunsuke, Tama-shi, Tokyo 206-0024 (JP); KANEZAWA, Shingo, Hachioji-shi, Tokyo 192-0045 (JP); SUZUKI, Akihiro, Tama-shi, Tokyo 206-0013 (JP)
(74) Representative: Gille Hrabal Partnerschaftsgesellschaft mbB Patentanwälte
(86) International application number: PCT/JP2020/018443
(87) International publication number: WO 2020/235337

(57) **Abstract**

An inspection data management system includes a terminal device and a management device that is communicable with the terminal device and is managed by a third party other than an inspector who performs a gas inspection of a gas production facility and a manager of the gas production facility. The terminal device includes an image data acquisition unit that acquires image data obtained by imaging of the gas production facility and an inspection data generation and transmission unit that generates inspection data related to the gas inspection for the gas production facility based on the image data acquired by the image data acquisition unit and transmits the generated inspection data to the management device. The management device includes an inspection data reception unit that receives the inspection data transmitted from the inspection data generation and transmission unit and an inspection data storage unit that stores the inspection data received by the inspection data reception unit.

## Description

### Technical Field

The present invention relates to an inspection data management system, a management device, a management method, and a terminal device.

### Background Art

For example, in the United States, natural gas (shale gas) and oil (shale oil) collected from a shale layer have been given importance as new natural resources since the 1990's and have been mined. As of 2011, the shale gas already accounted for 30% or more of the natural gas in the United States, and it is predicted that this proportion will increase in the future.

Under such circumstances, environmental problems have been highlighted. Methane gas is released into the atmosphere due to a gas leak caused by deterioration or the like of gas production facility (gas well facility), and there is a concern about an influence of a greenhouse effect on an increase in temperature and health damage of neighboring residents. In the United States, various laws and regulations have been established as regulations at the state level, and discussions on regulations have started at the federal and government level. In addition, a gas leak causes inability to recover gas that can be originally utilized as a resource, which causes economic loss.

Meanwhile, there is known a gas leak detection device that detects a gas leak in a monitoring target (for example, a gas production facility) by using an infrared camera having sensitivity to a wavelength band of light absorbed by gas (for example, methane) to be inspected (see, for example, Patent Literature 1).

Patent Literature 1 describes a gas detection device including an infrared camera and a visible light camera that capture images (moving images) of an inspection region including an inspection target, an image processing unit that processes infrared image data captured by the infrared camera, and a display unit. The image processing unit extracts an image including fluctuation caused by a gas leak from the image data of the inspection region. The display unit displays an inspection image in which the image data including the fluctuation is superimposed on image data of the inspection region captured by the visible light camera.

According to the gas detection device described in Patent Literature 1, an inspector can visit a place where the monitoring target is located and perform a gas inspection. Specifically, the inspector can visually and easily identify the place of the gas leak in the inspection region by visually recognizing the inspection image displayed on the display unit.

### Citation List

### Patent Literature

Patent Literature 1: JP 2012-58093 A

### Summary of Invention

### Technical Problem

In the above gas inspection, the infrared image data captured by the infrared camera, an image capturing place, an image capturing date and time, and the like are recorded as inspection data. According to laws and regulations, a gas production facility is required to submit periodic inspection reports based on inspection data. Therefore, a manager of the gas production facility submits an inspection report to a state government.

Here, since the inspection report is checked by a third party (the state government or the like) other than the inspector, there is a problem that the reliability of the inspection data needs to be secured, which means, for example, the inspection data is prevented from being falsified. In particular, in the gas inspection using the gas detection device described in Patent Literature 1, the infrared image data itself can be a strong evidence for determining the presence or absence of a gas leak, and thus, it is very important to manage the inspection data including the infrared image data while the inspection data is prevented from being falsified.

An object of the present invention is to provide an inspection data management system, a management device, a management method, and a terminal device capable of securing the reliability of inspection data.

### Solution to Problem

An inspection data management system according to the present invention includes a terminal device and a management device that is communicable with the terminal device and is managed by a third party other than an inspector who performs a gas inspection of a gas production facility and a manager of the gas production facility, wherein
the terminal device includes
an image data acquisition unit that acquires image data obtained by imaging of the gas production facility and
an inspection data generation and transmission unit that generates inspection data related to the gas inspection based on the image data acquired by the image data acquisition unit and transmits the generated inspection data to the management device, and
the management device includes
an inspection data reception unit that receives the inspection data transmitted from the inspection data generation and transmission unit and
an inspection data storage unit that stores the inspection data received by the inspection data reception unit.

A management device according to the present invention is
a management device managed by a third party other than an inspector who performs a gas inspection of a gas production facility and a manager of the gas production facility, and includes
an inspection data reception unit that receives inspection data transmitted from a terminal device that generates the inspection data related to the gas inspection based on image data obtained by imaging of the gas production facility and
an inspection data storage unit that stores the inspection data received by the inspection data reception unit.

A management method according to the present invention is
a management method performed by a management device managed by a third party other than an inspector who performs a gas inspection of a gas production facility and a manager of the gas production facility, and includes
receiving inspection data transmitted from a terminal device that generates the inspection data related to the gas inspection based on image data obtained by imaging of the gas production facility and
causing an inspection data storage unit to store the received inspection data.

A terminal device according to the present invention
is capable of communicating with a management device managed by a third party other than an inspector who performs a gas inspection of a gas production facility and a manager of the gas production facility, and includes
an image data acquisition unit that acquires image data obtained by imaging of the gas production facility and
an inspection data generation and transmission unit that generates inspection data related to the gas inspection based on the image data acquired by the image data acquisition unit and transmits the generated inspection data to the management device.

### Advantageous Effects of Invention

According to the present invention, it is possible to secure the reliability of inspection data.

### Brief Description of Drawings

Fig. 1 is a block diagram illustrating a functional configuration of an inspection data management system according to the present embodiment.
Fig. 2 is a diagram illustrating a setting example of a browsing access right.
Fig. 3 is a diagram illustrating an example of an inspection data display screen.

### Description of Embodiments

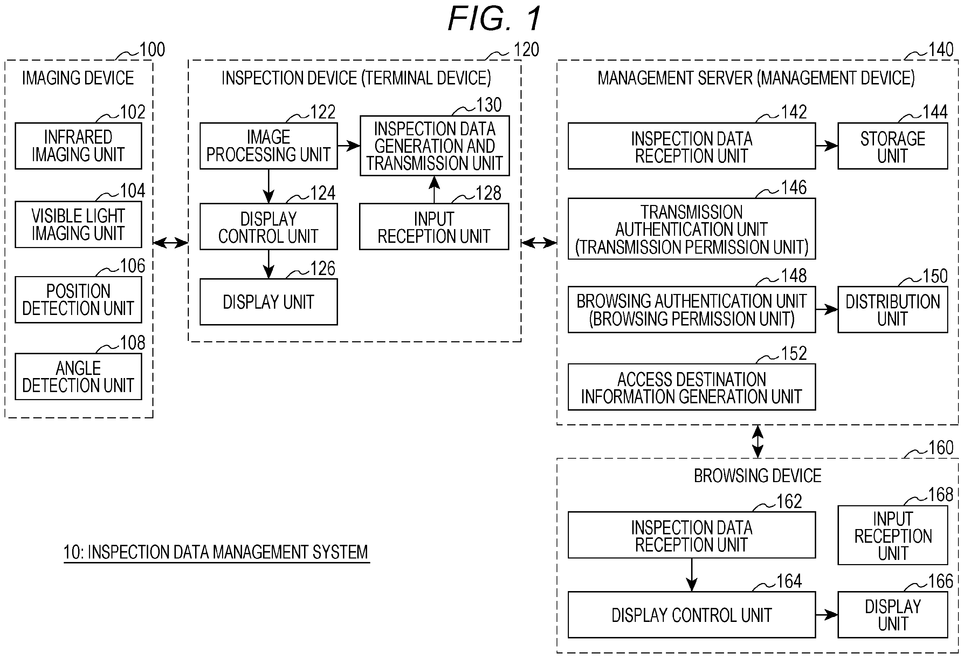

Fig. 1 is a block diagram illustrating a functional configuration of an inspection data management system 10 according to the present embodiment. As illustrated in Fig. 1, the inspection data management system 10 includes a portable imaging device 100, an inspection device 120 (which functions as a "terminal device" of the present invention), a management server 140 (which functions as a "management device" of the present invention), and a browsing device 160. The imaging device 100 and the inspection device 120 are connected by a communication cable (not illustrated). The inspection device 120 and the management server 140, and the management server 140 and the browsing device 160 are connected via a network such as the Internet. That is, communication between the inspection device 120 and the management server 140 and communication between the management server 140 and the browsing device 160 are performed by the management server 140 (HTTP server) based on a hypertext transfer protocol (HTTP).

Note that the imaging device 100 may be connected to the inspection device 120 via wireless communication, or the imaging device 100 and the inspection device 120 may be integrated. Furthermore, the imaging device 100 may be connected to the inspection device 120 via a network such as the Internet.

First, a configuration of the imaging device 100 will be described. The imaging device 100 is, for example, a portable camera device, and images an inspection region including a gas production facility (tanks, plants, and the like) to be inspected and generates infrared image data of the inspection region. Note that the imaging device 100 may be a camera device fixed at a predetermined position.

As illustrated in Fig. 1, the imaging device 100 includes an infrared imaging unit 102, a visible light imaging unit 104, a position detection unit 106, and an angle detection unit 108.

Note that the imaging device 100 includes, for example, a central processing unit (CPU) as a processor, a storage medium such as a read only memory (ROM) storing a control program, a working memory such as a random access memory (RAM), and a communication circuit, which are not illustrated. In this case, the functions of the above-described units are implemented by the CPU executing the control program.

The infrared imaging unit 102 includes a first optical system (not illustrated), a first optical filter (not illustrated), an infrared sensor (not illustrated), and the like. The first optical system forms, on the infrared sensor, an image of infrared rays incident from the inspection region (subject) including the gas production facility (tanks, plants, and the like) to be inspected.

The first optical filter is a bandpass filter or the like disposed on an optical path connecting the first optical system and the infrared sensor. Among the infrared rays having passed through the first optical system, only infrared rays included in a predetermined wavelength band pass through the first optical filter. The pass wavelength band of the first optical filter is substantially set to an absorption wavelength band of detected gas. For example, when the pass wavelength band is set to a middle wavelength range of 3.2 to 3.4 µm, methane gas or the like can be detected.

The infrared sensor is, for example, a quantum type image sensor using indium antimonide (InSb), and generates the infrared image data by receiving the infrared rays. For example, the infrared imaging unit 102 as described above images the inspection region including the gas production facility to be inspected in synchronization with the visible light imaging unit 104, and sequentially transmits the infrared image data to the inspection device 120.

The infrared image data generated by the infrared imaging unit 102 is a still image or a moving image. Such infrared image data indicates a temperature distribution in the inspection region.

The visible light imaging unit 104 includes a second optical system (not illustrated), a second optical filter (not illustrated), a visible light sensor (not illustrated), and the like. The second optical system forms, on the visible light sensor, an image of visible light incident from the inspection region as a subject.

The second optical filter is an infrared cut filter or the like disposed on an optical path connecting the second optical system and the visible light sensor. The infrared cut filter cuts infrared rays from the light having passed through the second optical system.

The visible light sensor is, for example, a CMOS image sensor, and receives monochrome (BW) visible light or color (RGB) visible light to generate visible image data.

The visible light imaging unit 104 as described above images the inspection region in synchronization with the infrared imaging unit 102, and sequentially transmits the visible image data to the inspection device 120. The visible image data generated by the visible light imaging unit 104 is a still image or a moving image.

The position detection unit 106 receives, for example, a global positioning system (GPS) signal, and detects the current position of the imaging device 100 based on the received GPS signal. The position detection unit 106 then transmits the detected current position of the imaging device 100 to the inspection device 120.

The angle detection unit 108 detects a combined value of accelerations in three axis directions generated in a main body of the imaging device 100, for example, based on a detection signal of an acceleration sensor (not illustrated) included in the imaging device 100, and detects an imaging angle (imaging direction) at which the imaging device 100 performs imaging based on the combined value. The angle detection unit 108 then transmits the detected imaging angle of the imaging device 100 to the inspection device 120.

Next, a configuration of the inspection device 120 will be described. The inspection device 120 visualizes gas generated in the inspection region using the information received from the imaging device 100 (the infrared image data and the visible image data). The inspection device 120 as described above is a portable terminal communicatively connected to the imaging device 100, such as a tablet terminal, a smartphone, a laptop terminal, or a wearable terminal.

The inspection device 120 includes an image processing unit 122, a display control unit 124, a display unit 126, an input reception unit 128, and an inspection data generation and transmission unit 130. Note that the image processing unit 122 functions as an "image data acquisition unit" of the present invention. In addition, the image processing unit 122 and the inspection data generation and transmission unit 130 function as an "inspection data generation and transmission unit" of the present invention.

Note that the inspection device 120 includes, for example, a central processing unit (CPU) as a processor, a storage medium such as a read only memory (ROM) storing a control program, a working memory such as a random access memory (RAM), and a communication circuit, which are not illustrated. In this case, the functions of the above-described units are implemented by the CPU executing the control program.

The image processing unit 122 acquires the infrared image data of the inspection region transmitted from the infrared imaging unit 102 (hereinafter, referred to as "infrared image data before image processing"). The image processing unit 122 then performs predetermined image processing on the infrared image data of the inspection region, detects a portion where the gas is present in the infrared image data, and visualizes the detected portion (hereinafter, referred to as "gas visualization processing"). The image processing unit 122 gives a specific color (for example, red or the like) to the portion where the gas is present in the infrared image data before image processing. The infrared image data subjected to the gas visualization processing is referred to as infrared image data after image processing.

Here, a method of detecting the gas from the infrared image data of the inspection region will be briefly described. When a gas leak occurs in the inspection region, a temperature change occurs in the portion where the gas is present in the infrared image data of the inspection region (that is, luminance changes in the infrared image data of the inspection region). The image processing unit 122 detects the portion where the gas is present based on such a temperature change. Note that the gas detection method is a known image processing method, and thus, detailed description thereof will be omitted.

The image processing unit 122 also acquires the visible image data transmitted from the visible light imaging unit 104 (hereinafter, referred to as "visible image data before image processing"). The image processing unit 122 then generates inspection image data obtained by combining the infrared image data after image processing with the visible image data before image processing.

The inspection image data is displayed as an inspection image on the display unit 126 under the control of the display control unit 124. A gas image corresponding to the gas in the inspection image is given the specific color. Note that the above-described infrared image data after image processing may be used as the inspection image data without being combined with visible image data. The infrared image data and the visible image data correspond to "image data" of the present invention.

In addition, the image processing unit 122 outputs the inspection image data to the display control unit 124 and the inspection data generation and transmission unit 130.

The display control unit 124 converts the inspection image data output from the image processing unit 122 into a display signal corresponding to the display unit 126, and causes the display unit 126 to display the converted display signal as the inspection image.

The display unit 126 is, for example, a display included in the inspection device 120. As the display, a liquid crystal display, an organic EL display, or the like can be used. In the present embodiment, the display is a flat panel display with a touch panel.

The display unit 126 displays, based on the display signal from the display control unit 124, various images such as the inspection image that is visually recognized by a user (for example, an inspector) so that a gas inspection is performed.

The input reception unit 128 receives various inputs (an information input and an instruction input) from the user via an operation unit (touch panel) not illustrated.

The inspection data generation and transmission unit 130 generates inspection data related to execution of the gas inspection for the gas production facility based on the inspection image data output from the image processing unit 122. In the present embodiment, the inspection data includes the inspection image data and imaging status information (also referred to as inspection record information) indicating an imaging status (for example, an inspector who performs the imaging, an imaging place, and an imaging date and time) when the gas production facility to be inspected in the inspection image data is imaged. The imaging status information is received by the input reception unit 128 as an input from the user. Note that the imaging status information may include the current position of the imaging device 100 transmitted from the position detection unit 106, the imaging angle of the imaging device 100 transmitted from the angle detection unit 108, and the like.

The inspection data generation and transmission unit 130 logs in to and accesses the management server 140 and transmits the generated inspection data to the management server 140. In the present embodiment, the inspection data generation and transmission unit 130 generates the inspection data and transmits the inspection data to the management server 140 immediately after the input reception unit 128 receives the input of the imaging status information.

Next, a functional configuration of the management server 140 will be described. The management server 140 is provided on the cloud and has a function of transmitting and receiving various types of data to and from other devices (the inspection device 120 and the browsing device 160). The management server 140 is operated and managed by a third party other than a manager and the inspector of the gas production facility.

The management server 140 includes an inspection data reception unit 142, a storage unit 144, a transmission authentication unit 146, a browsing authentication unit 148, a distribution unit 150, and an access destination information generation unit 152.

The management server 140 includes, for example, a central processing unit (CPU) as a processor, a storage medium such as a read only memory (ROM) storing a control program, a working memory such as a random access memory (RAM), and a communication circuit, which are not illustrated. In this case, the functions of the above-described units are implemented by the CPU executing the control program.

The inspection data reception unit 142 receives the inspection data transmitted from the inspection data generation and transmission unit 130 of the inspection device 120. The inspection data reception unit 142 allocates an ID for identifying a piece of inspection data each time the piece of inspection data is received, and causes the storage unit 144 to store, as new data, the piece of inspection data to which the ID is allocated. That is, pieces of inspection data received by the inspection data reception unit 142 are allocated with different IDs (not replaceable) without exception and newly registered (uploaded) in the storage unit 144. The inspection data registered in the storage unit 144 cannot be edited, and can only be browsed in the browsing device 160 when distributed from the management server 140. Note that the storage unit 144 includes, for example, a nonvolatile semiconductor memory (so-called flash memory) or a hard disk drive.

The storage unit 144 (which functions as an "inspection data storage unit" of the present invention) stores the inspection data received by the inspection data reception unit 142. In the present embodiment, from the viewpoint of preventing the inspection data from being falsified, the storage unit 144 stores the inspection image data and facility information related to the gas production facility to be inspected in the inspection image data in such a manner that overwriting is prohibited (edition is not allowed). The facility information includes a name of the gas production facility and information on the manager who manages the gas production facility, and is stored in the storage unit 144 in advance by the manager accessing the management server 140 and performing a registration operation. Note that, when the manager accesses the management server 140 and performs the registration operation, a user ID and a password of the manager may be input so that the manager may be authenticated. This operation is to prevent unauthorized registration of facility information by a manager who is not authentic.

When the inspector (corresponding to a "first user" of the present invention) who uses the inspection device 120 requests to transmit the inspection data to the management server 140, the transmission authentication unit 146 (which also functions as a "transmission permission unit" of the present invention) authenticates the inspector. In the present embodiment, the transmission authentication unit 146 performs personal authentication of the inspector using the user ID and the password of the inspector whose input has been received by the input reception unit 128 of the inspection device 120. Note that information regarding the user ID and the password of the inspector is stored in the storage unit 144.

When the authentication is established, the transmission authentication unit 146 permits the inspector to transmit the inspection data. Upon receiving this permission, the inspection data generation and transmission unit 130 of the inspection device 120 can transmit the generated inspection data to the management server 140.

When a viewer (corresponding to a "second user" of the present invention) who uses the browsing device 160 requests to browse the inspection data, the browsing authentication unit 148 (which also functions as a "browsing permission unit" of the present invention) authenticates the viewer. In the present embodiment, the browsing authentication unit 148 performs personal authentication of the viewer using a user ID and a password of the viewer whose input has been received by an input reception unit 168 of the browsing device 160. Note that information regarding the user ID and the password of the viewer is stored in the storage unit 144.

When the authentication is established, the browsing authentication unit 148 permits the viewer to browse the inspection data. In the present embodiment, the browsing authentication unit 148 permits browsing inspection data to which the viewer is given a browsing access right among the inspection data stored in the storage unit 144 of the inspection device 120. With this permission, the browsing device 160 can receive the distribution of the inspection data from the management server 140 and browse the inspection data. Note that the range of the inspection data to which the viewer is given the browsing access right is, for example, the range of the inspection data corresponding to the gas production facility actually managed by the viewer (manager). Access right information related to the browsing access right is stored in the storage unit 144.

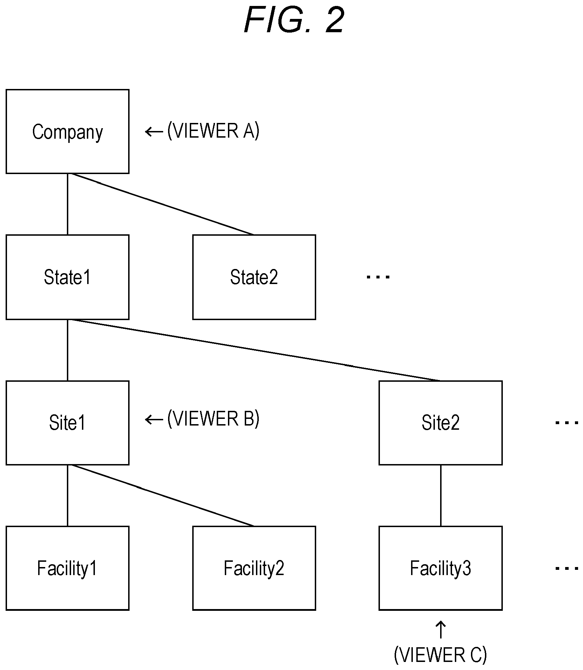

Fig. 2 is a diagram illustrating a setting example of the browsing access right for the viewer. Gas production facilities corresponding to pieces of inspection data are defined in a hierarchical structure including a superordinate concept (Company), a mid-level concept (State and Site), and a subordinate concept (Facility).

Company is arranged in the highest layer. For example, all gas production facilities managed by a certain gas company (hereinafter, simply referred to as "gas company") belong to Company.

State 1, State 2, and the like are arranged in a layer immediately lower than Company. For example, among the gas production facilities that belong to Company, all gas production facilities managed by the gas company in a country A belong to State 1. For example, among the gas production facilities that belong to Company, all gas production facilities managed by the gas company in a country B belong to State 2.

Site 1, Site 2, and the like are arranged in a layer immediately lower than State 1. For example, among the gas production facilities that belong to State 1, all gas production facilities managed by the gas company in a state A of the country A belong to Site 1. For example, among the gas production facilities that belong to State 1, all gas production facilities managed by the gas company in a state B of the country A belong to Site 2.

Facility 1 and Facility 2 as gas production facilities are arranged in a layer immediately lower than Site 1. Facility 3 as a gas production facility is arranged in a layer immediately lower than Site 2.

As illustrated in Fig. 2, a viewer A (for example, a manager of the gas company) is given the browsing access right to inspection data corresponding to all the gas production facilities that belong to Company among the inspection data stored in the storage unit 144 of the inspection device 120.

Furthermore, a viewer B (for example, an inspector in charge of inspection of gas production facilities) is given the browsing access right to inspection data corresponding to all the gas production facilities that belong to Site 1 among the inspection data stored in the storage unit 144 of the inspection device 120. In this case, the range of the inspection data to which the viewer B is given the browsing access right is, for example, the range of inspection data corresponding to the gas production facilities in which the viewer B is actually in charge of the gas inspection.

Furthermore, a viewer C (for example, an inspector in charge of inspection of a gas production facility) is given the browsing access right to inspection data corresponding to a part of the gas production facilities that belong to Site 2 (Facility 3 in the example of Fig. 2) among the inspection data stored in the storage unit 144 of the inspection device 120. In this case, the range of the inspection data to which the viewer C is given the browsing access right is, for example, the range of inspection data corresponding to the gas production facility in which the viewer C is actually in charge of the gas inspection.

Returning to the description of the functional configuration of the management server 140, when the browsing authentication unit 148 permits browsing the inspection data, the distribution unit 150 distributes the inspection data to the browsing device 160 in a format in which the inspection data cannot be stored in the browsing device 160. In the present embodiment, the format in which the inspection data cannot be stored is a live streaming format (for example, HTTP Live Streaming, which is a protocol dedicated to streaming) or a progressive download format. Here, the progressive download format is a format in which, when a request to browse the inspection data is made in the browsing device 160, the inspection data is browsed and reproduced while being automatically downloaded to a temporary folder, a hidden folder, or the like in a storage unit (not illustrated) of the browsing device 160.

The access destination information generation unit 152 generates access destination information indicating an access destination of the inspection data stored in the storage unit 144. In the present embodiment, the access destination information generation unit 152 generates, as the access destination information, uniform resource locator (URL) information by which the user can directly access the inspection data at a timing when the inspection data reception unit 142 registers the inspection data in the storage unit 144. Here, the URL information by which the user can directly access the inspection data indicates a URL in which, when access is made by a web browser, only the corresponding piece of inspection data is displayed or the corresponding piece of inspection data is highlighted and displayed among the plurality of pieces of inspection data.

Note that the access destination information generation unit 152 may generate the access destination information for each of the gas production facilities corresponding to the pieces of inspection data stored in the storage unit 144, or may generate the access destination information for each equipment (for example, a tank, a compressor, or the like) of a gas production facility.

Next, a configuration of the browsing device 160 will be described. The browsing device 160 logs in to and accesses the management server 140, receives the distribution of the inspection data from the management server 140, and displays the inspection data for browsing. The browsing device 160 as described above is, for example, a portable terminal such as a tablet terminal, a smartphone, a laptop terminal, or a wearable terminal.

The browsing device 160 includes an inspection data reception unit 162, a display control unit 164, a display unit 166, and the input reception unit 168.

The browsing device 160 includes, for example, a central processing unit (CPU) as a processor, a storage medium such as a read only memory (ROM) storing a control program, a working memory such as a random access memory (RAM), and a communication circuit, which are not illustrated. In this case, the functions of the above-described units are implemented by the CPU executing the control program.

The inspection data reception unit 162 receives the inspection data distributed from the distribution unit 150 of the management server 140. The inspection data reception unit 162 then outputs the received inspection data to the display control unit 164.

The display control unit 164 performs control to generate an inspection data display screen including the inspection data output from the inspection data reception unit 162 and cause the display unit 166 to display the generated inspection data display screen.

The display unit 166 is, for example, a liquid crystal display provided in the browsing device 160, and displays the inspection data display screen under the control of the display control unit 164.

The input reception unit 168 receives various inputs (an information input and an instruction input) from the viewer via an operation unit not illustrated.

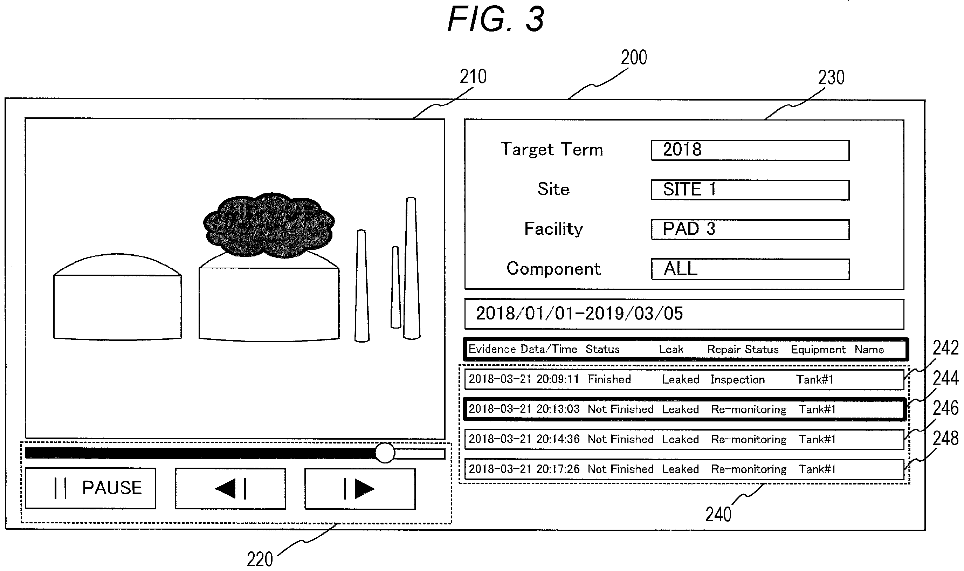

Fig. 3 is a diagram illustrating an example of the inspection data display screen. As illustrated in Fig. 3, an inspection data display screen 200 has display areas 210, 220, 230, and 240.

The display area 210 is an area in which the inspection image corresponding to the inspection image data included in the inspection data is reproduced and displayed. As illustrated in Fig. 3, the gas image corresponding to the gas in the inspection image is given the specific color. The display area 220 is an area in which the viewer gives instructions to perform various reproduction operations (reproduction, pause, rewinding, fast forwarding, and the like) of the inspection image.

The display area 230 is an area in which the imaging status information included in the inspection data is displayed as text. In the example illustrated in Fig. 3, "2018" as an imaging year (Target Term), "SITE 1" as an imaging place (Site), "PAD 3" as a gas production facility to be inspected (Facility), and "ALL (all components)" as components of the gas production facility to be inspected (Component) are displayed in the display area 230.

The display area 240 is an area in which inspection data information related to the inspection data to which the viewer is given the browsing access right among the inspection data stored in the storage unit 144 of the inspection device 120 is displayed in a list form. The viewer clicks and selects inspection data information corresponding to an inspection image to be reproduced and displayed in the display area 240 from the inspection data information displayed in the display area 210. In the example illustrated in Fig. 3, pieces of inspection data information 242, 244, 246, and 248 are displayed in the display area 240.

Each of the pieces of inspection data information 242, 244, 246, and 248 includes items of "Evidence Date/Time", "Status", "Leak", "Repair Status", and "Equipment Name". The item "Evidence Date/Time" indicates an imaging date and time. The item "Status" indicates that repair is completed (Finished) or not completed (Not Finished) after a gas leak. "Leak" indicates that there was a gas leak (Leaked) or there was no gas leak (Not Leaked). "Repair Status" indicates that the inspection status is a regular inspection (Inspection) or a re-inspection after repair (Re-monitoring). "Equipment Name" indicates a name of an equipment (for example, a tank or a compressor) of the gas production facility (for example, a gas production plant) to be inspected.

Note that the display items in the display area 240 further include "Equipment ID", "Equipment Type", "Component ID", "Component Type", "Repair Delayed", "Date delay no longer exist", "Date Complete Repair", and "Inspector Name", and these display items may be displayed so as to be scrollable in a horizontal direction. The item "Equipment ID" indicates an ID (for example, T-001 or C-002) for identifying an equipment of the gas production facility. The item "Equipment Type" indicates the type of the equipment (for example, a tank or a compressor) of the gas production facility. The item "Component ID" indicates an ID (for example, V-00001 or F-00002) for identifying a component (part) at a location where the gas leak occurs in the equipment of the gas production facility. The item "Component Type" indicates the type of the component (for example, a valve or a flange) at the location where the gas leak occurs in the equipment of the gas production facility. The item "Repair Delayed" indicates whether a repair deadline specified by law has passed (YES/NO). The item "Date delay no longer exist" indicates the date when the repair was completed and the delay was resolved. The item "Date Complete Repair" indicates the date when the repair was completed. The item "Inspection Name" indicates a name of the inspector.

In the example illustrated in Fig. 3, the input reception unit 168 receives a selection input of the piece of inspection data information 244 by the viewer, whereby the display control unit 164 reproduces and displays an inspection image corresponding to the piece of inspection data information 244 in the display area 210.

Note that the display control unit 164 may display information regarding the inspector of the gas production facility (the person who images the gas production facility) as text on the inspection data display screen. In addition, the display control unit 164 may display the imaging place of the gas production facility on a map on the inspection data display screen.

As described above in detail, the inspection data management system 10 according to the present embodiment includes the inspection device 120 (terminal device) and the management server 140 (management device) that is communicable with the inspection device 120 and is managed by a third party other than an inspector who performs a gas inspection of a gas production facility and a manager of the gas production facility. The inspection device 120 includes the image processing unit 122 (image data acquisition unit) that acquires image data obtained by imaging of the gas production facility and the inspection data generation and transmission unit 130 that generates inspection data related to the gas inspection for the gas production facility based on the image data (infrared image data and visible image data) acquired by the image processing unit 122 and transmits the generated inspection data to the management server 140. The management server 140 includes the inspection data reception unit 142 that receives the inspection data transmitted from the inspection data generation and transmission unit 130 and the storage unit 144 (inspection data storage unit) that stores the inspection data received by the inspection data reception unit 142.

According to the present embodiment configured as described above, the inspection data is operated and managed in the management server 140 used by the third party other than the manager (producer) and the inspector of the gas production facility. As a result, it is possible to manage the inspection data while the manager and the inspector of the gas production facility is prevented from falsifying the inspection data, and eventually, it is possible to secure the reliability of the inspection data.

In addition, in the present embodiment, the inspection data includes inspection image data generated by gas visualization processing performed on the image data and imaging status information indicating an imaging status when the gas production facility is imaged. As a result, the inspection image data is registered in the storage unit 144 as the inspection data together with the imaging status information. Therefore, even if the inspection image data is taken out to an external device other than the inspection device 120 and falsified, the falsified inspection image data cannot be registered in the storage unit 144 since there is no imaging status information, and it is possible to secure the reliability of the inspection image data stored in the storage unit 144.

In addition, in the present embodiment, the inspection device 120 includes the input reception unit 128 that receives an input of the imaging status information. The inspection data generation and transmission unit 130 generates the inspection data and transmits the inspection data to the management server 140 immediately after the input reception unit 128 receives the input of the imaging status information. As a result, the inspection data is registered in the storage unit 144 without giving the inspector a timing to falsify the inspection data. Therefore, it is possible to secure the reliability of the inspection data stored in the storage unit 144.

Furthermore, in the present embodiment, the management server 140 includes the transmission authentication unit 146 that authenticates the inspector (first user) who uses the inspection device 120 when the inspector requests to transmit the inspection data to the management server 140 and a transmission permission unit (the transmission authentication unit 146) that permits the inspector to transmit the inspection data when the authentication by the transmission authentication unit 146 is established. As a result, it is possible to prevent an inspector who is not authentic from transmitting or registering the inspection data, and to secure the reliability of the inspection data registered in the storage unit 144.

In addition, in the present embodiment, the inspection data management system 10 includes the browsing device 160 that is communicable with the management server 140, receives distribution of the inspection data stored in the storage unit 144, and displays the inspection data for browsing. The management server 140 includes the browsing authentication unit 148 that authenticates a viewer (second user) who uses the browsing device 160 when the viewer requests to browse the inspection data and a browsing permission unit (the browsing authentication unit 148) that permits the viewer to browse the inspection data when the authentication by the browsing authentication unit 148 is established. As a result, it is possible to appropriately prevent a viewer who is not authentic from unnecessarily browsing the inspection data.

In addition, in the present embodiment, the browsing authentication unit 148 permits browsing inspection data to which the viewer is given a browsing access right among the inspection data stored in the storage unit 144. As a result, it is possible to appropriately prevent the viewer from unnecessarily browsing inspection data to which the viewer is not given the browsing access right.

In addition, in the present embodiment, the management server 140 includes the distribution unit 150 that distributes the inspection data to the browsing device 160 in a format in which the inspection data is not storable in the browsing device 160 when the browsing authentication unit 148 permits browsing the inspection data. As a result, the viewer cannot acquire the inspection data while browsing the inspection data in the browsing device 160, and it is possible to appropriately prevent the viewer from falsifying the inspection data.

In addition, in the present embodiment, the management server 140 includes the access destination information generation unit 152 that generates access destination information indicating an access destination of the inspection data (in particular, the inspection image data) stored in the storage unit 144. As a result, for example, when the viewer creates an inspection report (for example, a PDF file) to be submitted in the browsing device 160, the access destination information can be acquired from the management server 140 and described in the inspection report. In this case, the third party (for example, a checking agency such as a government) who checks the submitted inspection report can easily access the inspection image data, which is a strong evidence for determining the presence or absence of a gas leak, through a web browser or the like.

Note that the above embodiment is merely an example of implementation in carrying out the present invention, and the technical scope of the present invention should not be interpreted in a limited manner by this embodiment. That is, the present invention can be carried out in various forms without departing from its gist or its main features.

The entire disclosure of the specification, drawings, and abstract included in Japanese Patent Application No. 2019-094636 filed on May 20, 2019 is incorporated herein by reference.

### Reference Signs List

- 10: Inspection data management system
- 100: Imaging device
- 102: Infrared imaging unit
- 104: Visible light imaging unit
- 106: Position detection unit
- 108: Angle detection unit
- 120: Inspection device
- 122: Image processing unit
- 124: Display control unit
- 126: Display unit
- 128: input reception unit
- 130: Inspection data generation and transmission unit
- 140: Management server
- 142: Inspection data reception unit
- 144: Storage unit
- 146: Transmission authentication unit
- 148: Browsing authentication unit
- 150: Distribution unit
- 152: Access destination information generation unit
- 160: Browsing device
- 162: Inspection data reception unit
- 164: Display control unit
- 166: Display unit
- 168: input reception unit
- 200: Inspection data display screen
- 210, 220, 230, 240: Display area
- 242, 244, 246, 248: Inspection data information

## Claims

1. An inspection data management system comprising: a terminal device; and a management device that is communicable with the terminal device and is managed by a third party other than an inspector who performs a gas inspection of a gas production facility and a manager of the gas production facility, wherein
the terminal device includes
an image data acquisition unit that acquires image data obtained by imaging of the gas production facility and
an inspection data generation and transmission unit that generates inspection data related to the gas inspection based on the image data acquired by the image data acquisition unit and transmits the generated inspection data to the management device, and
the management device includes
an inspection data reception unit that receives the inspection data transmitted from the inspection data generation and transmission unit and
an inspection data storage unit that stores the inspection data received by the inspection data reception unit.

2. The inspection data management system according to claim 1, wherein
the inspection data storage unit stores the inspection data and facility information related to the gas production facility in association with each other.

3. The inspection data management system according to claim 1 or 2, wherein
the management device includes
a transmission authentication unit that authenticates a first user who uses the terminal device when the first user requests to transmit the inspection data to the management device and
a transmission permission unit that permits the first user to transmit the inspection data when the authentication by the transmission authentication unit is established.

4. The inspection data management system according to any one of claims 1 to 3, wherein
the management device
is communicable with a browsing device that receives distribution of the inspection data stored in the inspection data storage unit and displays the inspection data for browsing, and
includes a browsing authentication unit that authenticates a second user who uses the browsing device when the second user requests to browse the inspection data and
a browsing permission unit that permits the second user to browse the inspection data when the authentication by the browsing authentication unit is established.

5. The inspection data management system according to claim 4, wherein
the browsing permission unit permits browsing inspection data to which the second user is given a browsing access right among the inspection data stored in the inspection data storage unit.

6. The inspection data management system according to claim 4 or 5, wherein
the management device includes
a distribution unit that distributes the inspection data to the browsing device in a format in which the inspection data is not storable in the browsing device when the browsing permission unit permits browsing the inspection data.

7. The inspection data management system according to claim 1, wherein
the management device
is communicable with a browsing device that receives distribution of the inspection data stored in the inspection data storage unit and displays the inspection data for browsing, and
includes a distribution unit that distributes the inspection data to the browsing device in a format in which the inspection data is not storable in the browsing device.

8. The inspection data management system according to any one of claims 4 to 7, wherein
the management device includes
an access destination information generation unit that generates access destination information indicating an access destination of the inspection data stored in the inspection data storage unit.

9. The inspection data management system according to any one of claims 1 to 8, wherein
the inspection data includes inspection image data generated by gas visualization processing performed on the image data and imaging status information indicating an imaging status when the gas production facility is imaged.

10. The inspection data management system according to claim 9, wherein
the terminal device includes an input reception unit that receives an input of the imaging status information, and
the inspection data generation and transmission unit generates the inspection data and transmits the inspection data to the management device immediately after the input reception unit receives the input of the imaging status information.

11. A management device managed by a third party other than an inspector who performs a gas inspection of a gas production facility and a manager of the gas production facility, the management device comprising:
an inspection data reception unit that receives inspection data transmitted from a terminal device that generates the inspection data related to the gas inspection based on image data obtained by imaging of the gas production facility; and
an inspection data storage unit that stores the inspection data received by the inspection data reception unit.

12. The management device according to claim 11, wherein
the inspection data storage unit stores the inspection data and facility information related to the gas production facility in association with each other.

13. The management device according to claim 11 or 12, comprising:
a transmission authentication unit that authenticates a first user who uses the terminal device when the first user requests to transmit the inspection data to the management device; and
a transmission permission unit that permits the first user to transmit the inspection data when the authentication by the transmission authentication unit is established.

14. The management device according to any one of claims 11 to 13, wherein
the management device
is communicable with a browsing device that receives distribution of the inspection data stored in the inspection data storage unit and displays the inspection data for browsing, and
comprises: a browsing authentication unit that authenticates a second user who uses the browsing device when the second user requests to browse the inspection data; and
a browsing permission unit that permits the second user to browse the inspection data when the authentication by the browsing authentication unit is established.

15. The management device according to claim 14, wherein
the browsing permission unit permits browsing inspection data to which the second user is given a browsing access right among the inspection data stored in the inspection data storage unit.

16. The management device according to claim 14 or 15, comprising
a distribution unit that distributes the inspection data to the browsing device in a format in which the inspection data is not storable in the browsing device when the browsing permission unit permits browsing the inspection data.

17. The management device according to claim 11, wherein
the management device
is communicable with a browsing device that receives distribution of the inspection data stored in the inspection data storage unit and displays the inspection data for browsing, and
comprises a distribution unit that distributes the inspection data to the browsing device in a format in which the inspection data is not storable in the browsing device.

18. The management device according to any one of claims 14 to 17, comprising
an access destination information generation unit that generates access destination information indicating an access destination of the inspection data stored in the inspection data storage unit.

19. The management device according to any one of claims 11 to 18, wherein
the inspection data includes inspection image data generated by gas visualization processing performed on the image data and imaging status information indicating an imaging status when the gas production facility is imaged.

20. The management device according to claim 19, wherein
the terminal device includes an input reception unit that receives an input of the imaging status information, and
the inspection data generation and transmission unit generates the inspection data and transmits the inspection data to the management device immediately after the input reception unit receives the input of the imaging status information.

21. A management method performed by a management device managed by a third party other than an inspector who performs a gas inspection of a gas production facility and a manager of the gas production facility, the management method comprising:
receiving inspection data transmitted from a terminal device that generates the inspection data related to the gas inspection based on image data obtained by imaging of the gas production facility; and
causing an inspection data storage unit to store the received inspection data.

22. A terminal device capable of communicating with a management device managed by a third party other than an inspector who performs a gas inspection of a gas production facility and a manager of the gas production facility, the terminal device comprising:
an image data acquisition unit that acquires image data obtained by imaging of the gas production facility; and
an inspection data generation and transmission unit that generates inspection data related to the gas inspection based on the image data acquired by the image data acquisition unit and transmits the generated inspection data to the management device.
